# EUROPÄISCHE PATENTANMELDUNG

(11) **EP 2 196 276 A1**
(43) Veröffentlichungstag der Anmeldung: **16.06.2010**
(21) Anmeldenummer: 08021762.3
(22) Anmeldetag: 15.12.2008
(51) Int. Cl.: B23K 1/00, B23K 35/02, F01D 5/00

(54) **Formkörper zum Löten, Anordnung von Formlkörpern, ein Verfahren sowie ein Bauteil**

(71) Anmelder: Siemens Aktiengesellschaft, 80333 München (DE)
(72) Erfinder: Ressel, Christian, 54314 Zerf (DE); Anton, Rainer, Dr., 47228 Duisburg (DE); Heinecke, Brigitte, Dr., 45468 Mühlheim an der Ruhr (DE); Ott, Michael, Dr., 45470 Mühlheim an der Ruhr (DE)

(57) **Zusammenfassung**

Der Einsatz von vorgesinterten Lötblechen, so genannten PSPs, verläuft häufig ohne eine durchgängige, zusammenhängende Lötanbindung zwischen einzelnen Körnern im Sintermaterial als auch zwischen dem Sinter- und Grundmaterial. Aus diesem Grunde wird vorgeschlagen, vorgefertigte, perforierte, poröse oder gebohrte Bleche (Sinter-, Guss- oder Walzmaterial) oder poröses, schwammartiges, flächiges, flächenschlüssig auf einem Grundkörper verlegbares Material als mehrere Fliesen oder als einzelner, auf eine Aussparung im Grundmaterial konturnah ausgebildeter poröser, gebohrter oder perforierter Inlaykörper zu verlöten. Dabei können die gewählten Blechmaterialien dem Grundmaterial mechanisch gleichgestellt oder sonst auf besondere Anforderungen des Bauteileinsatzes abgestellt sein. Das Lot kann durch gezielt diffusionsfähige schmelzpunkterniedrigende Komponenten versetzt sein.

## Beschreibung

Die Erfindung betrifft poröse Formkörper und eine Anordnung die beim Löten verwendet werden, ein Verfahren sowie dadurch hergestellte Bauteile.

Zur Wiederherstellung von Materialabtrag während der Reparatur von Bauteilen, wie z.B. Turbinenschaufeln, kommen Belotungsverfahren zum Einsatz. Bedingt durch die Verwendung von vorgesintertem Blech- bzw. Flachmaterial (presintered preform = PSP) treten im Verlauf von deren Applikation Anbindungsfehler, Porositäten und andere mechanische Schwachstellen im Lotergebnis auf dem Substrat auf.
Zur Reparatur von Turbinenschaufeln durch Lötverfahren mit PSPs kommen bislang vorgesinterte Bleche bzw. Flachmaterialien, bestehend aus hochschmelzenden Legierungs- und niedrigschmelzenden Lotanteilen, die während des Lötprozesses eine Schmelzbenetzung und damit eine Verlötung zwischen Grundmaterial (Bauteil) und hochschmelzenden Sinteranteilen des PSPs erreichen, zur Anwendung. Dabei tritt je nach Mischungsverhältnissen zwischen hoch- und niedrigschmelzenden Anteilen sowie je nach Kornmorphologien im Sintermaterial oft eine unvollständige Benetzung sowohl des Sinter- als auch des Grundmaterials ein.

Es ist Aufgabe der Erfindung die oben genannten Probleme zu beheben.

Die Aufgabe wird gelöst durch Formkörper gemäß Anspruch 1, eine Anordnung gemäß Anspruch 12, einem Verfahren gemäß Anspruch 14 und einem Bauteil nach Anspruch 15.

In den Unteransprüchen sind weitere vorteilhafte Maßnahmen aufgelistet, die beliebig miteinander kombiniert werden können, um weitere Vorteile zu erzielen.

Die Erfindung beruht auf der Idee, vorgefertigtes Flachmaterial - gegossen, gewalzt, gesintert - bestehend alleine aus festigkeits- und verschleißrelevantem Werkstoff ohne Lotanteile in fliesengemäßer Geometrie - form- bzw. flächenschlüssig verhakend oder nicht verhakend - aneinandergefügt mit Lot auf einem Substrat zu verlöten. Dabei werden das zu verlötende Flachmaterial in geeigneter Weise vorzugsweise durchgängig gemacht, um einen Lotauftrag auf der dem Substrat abgewandten Seite vor der Lötung und dessen Kapillarfluss in den Spalt zwischen Flachmaterial und Substrat während des Lötvorgangs zu gewährleisten. Ferner stellt die zwischen dem einzelnen miteinander verhakten Flachmaterial gehaltene Spaltweite einen Kapillarfluss des Lotes auch hierin sicher.

Es zeigen
- Figur 1,2,3,4,5,6,7: poröse Formkörper,
- Figur 8: eine Gasturbine,
- Figur 9: eine Turbinenschaufel,
- Figur 10: eine Brennkammer,

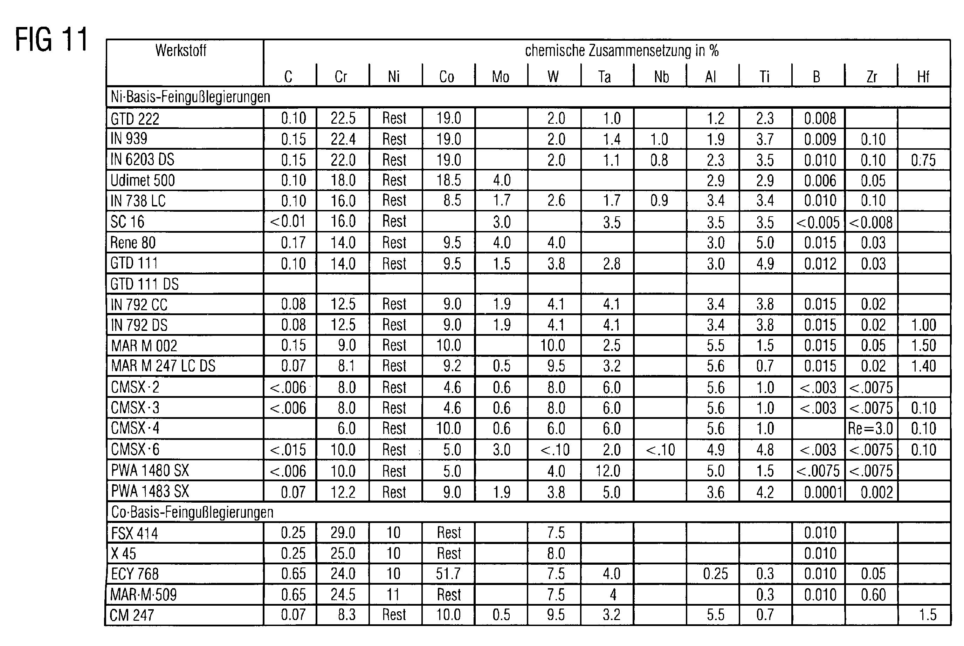

- Figur 11: eine Liste von Superlegierungen.

Die Figuren und die Beschreibung stellen nur Ausführungsbeispiele der Erfindung dar.

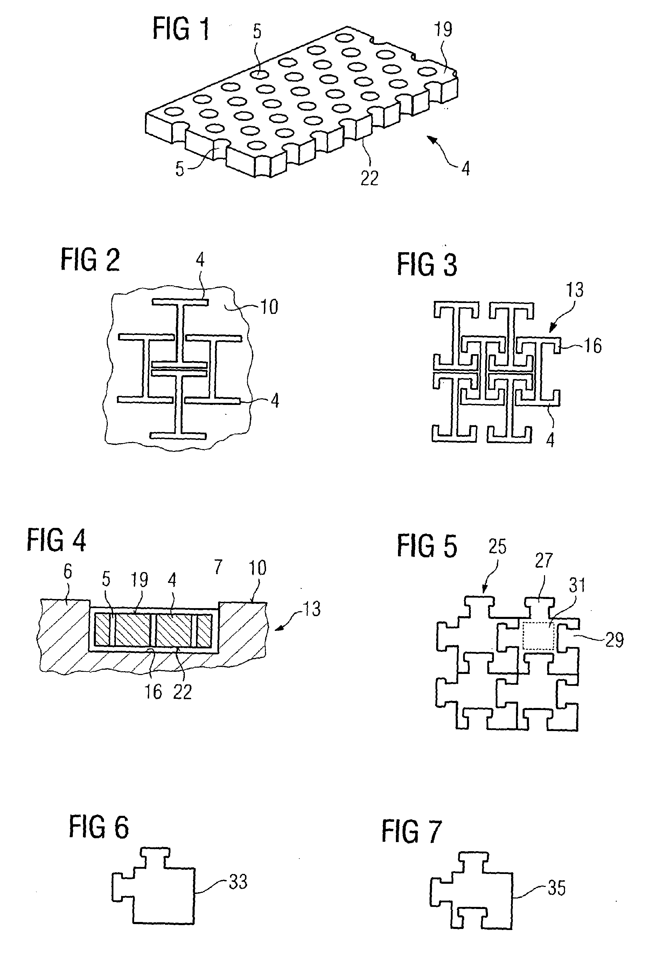

In Figur 1 ist ein Formkörper 4 gezeigt, der in Form eines Flachmaterials vorliegt und vorzugsweise als Blech oder vorzugsweise in gewalzter, gesinterter, gegossener Form ausgeführt ist und dessen Dicke vorzugsweise nach der Tiefe der mit der Belotung und des Einsatzes dieses Formkörpers 4 instand zu setzenden Materialabtrags am Bauteil 6, 13 (Fig. 4) bemessen wird und durchgehende Durchgänge 5, also vorzugsweise perforiert oder gebohrt ist. Ebenso kann vorzugsweise ein schwammartiges Gebilde verwendet werden, das eine offene durchgehende Porosität aufweist, so dass ein aufgeschmolzenes oder flüssiges Lot von der einen Oberfläche 19 (Fig. 4) des Formkörpers 4 zur anderen Oberfläche 22 (Fig. 4) des Formkörpers 4 hindurchfließen kann.
Die Kombination von Perforationen, Bohrungen oder Poren (Schwamm) ist ebenso vorzugsweise möglich.

Typische Dicken des Flachmaterials sind 0.5mm bis 1.5mm, vorzugsweise 0.7mm bis 1.2mm.
Flach bedeutet, dass eine Dicke d des Formkörpers 4: d << a, b, wobei a und b die Länge und Breite des Formkörpers 4 sind.

Der Durchmesser von Perforationen 5 in dem Formkörper 4 muss dabei so bemessen sein, dass ein Kapillarfluss des Lotes zwischen Ober- 19 und Unterseite 22 jedes Formkörpers 4 sichergestellt ist. Dabei ergibt sich der typische Durchmesser von Perforationen oder die typische Porengröße aus der kapillaren Steighöhe des schmelzflüssigen Lotes, die vorzugsweise mindestens der Dicke des perforierten/porösen Formkörpers zu entsprechen hat.
Der Durchmesser der Perforation 5 liegt vorzugsweise zwischen 0.05mm und 0.3mm.

Darüber hinaus ist der Abstand der einzelnen Perforationen 5 zueinander so zu bemessen, dass eine Versorgung des Spalts zwischen Formkörper 4 und Substrat 6 mit Lot durch den Kapillarfluss in Bohrungen 5 und Spalten (Fig. 4) innerhalb der anzuwendenden Prozesszeiten sichergestellt ist.

Das Material dieses porösen Formkörpers 4 ist vorzugsweise metallisch, insbesondere eine nickelbasierte Superlegierung und entspricht vorzugsweise dem Material des Bauteils 6 (Fig. 4), das repariert werden soll.
Es weist daher vorzugsweise neben Nickel, Kobalt, Chrom, Aluminium auch noch mindestens eines der Elemente Molybdän (Mo), Wolfram (W), Titan (Ti) und/oder Tantal (Ta) auf.
Das Bauteil 13 weist ebenso vorzugsweise eine nickel- oder kobaltbasierte Legierung auf.

Figur 2 zeigt einen porösen Formkörper 4, der die Form eines Doppel-T's aufweist und der in einer speziellen Anordnung auf ein Bauteil 13 (in Fig. 4) aufgelegt ist.
Dabei werden vorzugsweise zwei Doppel-T-Stücke längs (übereinander) aneinander gelegt und seitlich davon ein weiteres T-Stück, das mit seinen T-Enden die beiden direkt aneinanderliegenden T-Enden der ersten beiden T-Stücke umfasst. So findet eine Verhakung statt.

In Figur 3 ist ein weiteres Ausführungsbeispiel von Formkörpern 4 gezeigt, wobei ebenfalls die Formkörper 4 eine Doppel-T-Struktur aufweisen mit einer zusätzlichen Verhakung 16 an den Enden des T-Balkens 13.
Dadurch greifen die T-Stücke noch besser ineinander ein und sind in beiden Richtungen in einer Ebene miteinander verhakt, wobei dies in Figur 2 nur in einer Richtung der Fall wäre. Durch entsprechende Größenbemessung wird sowohl die Kapillarbefüllung in den Spalten zwischen einzelnen Formkörpern als auch eine Anpassung an eine etwaige Substratkrümmung bei Einhaltung eines maximal durch Kapillarfluss befüllbaren Spalts gegenüber dem Substrat 6 gewährleistet.
Die zu reparierende Fläche wird durch die Formkörper 4 bis auf geringe Spalte fast vollständig bedeckt, so dass nur noch durch die Spalte zwischen den Formkörpern 4 das Substrat 6 zu erkennen ist.
Im Randbereich der zu reparierenden Stelle können die Doppelstücke auch halbiert werden.

Die Spalten zwischen den Formkörpern 4 wird individuell angepasst und ist in Figur 2, 3 nur schematisch dargestellt.

Das zu reparierende Bauteil 13 weist vorzugsweise eine Vertiefung 7 auf, in die die porösen Formkörper 4 eingelegt werden (Fig. 4).

Vorzugsweise wird in der Höhe (also von 16 zu 10 hin) nur ein Formkörper 4 verwendet. Eine Stapelung von Formkörpern 4 ist aber auch vorzugsweise möglich.

Vorzugsweise vorher wird auf die Unterseite 16 der Vertiefung 7 ein Lotmaterial aufgebracht.

Mit oder ohne vorherige Einbringung eines Lotmaterials auf die Oberfläche 16 wird dann der poröse Formkörper 4 in die Vertiefung 7 oder auf die Fläche 16 aufgelegt.

Dann wird Lotmaterial auf die äußere Oberfläche 19 des Formkörpers 4 aufgetragen und durch eine Wärmebehandlung und durch die Kapillarkräfte fließt das flüssige Lot in Poren/Bohrungen/Perforationen als auch in Spalte zwischen einzelnen Formkörpern wie auch in Spalte zwischen Grund- und Formkörper.
Die Vertiefung 7 ist aufgefüllt und das Bauteil 13 hat wieder seine ursprüngliche Wandstärke.

Ein Lotmaterial ist jedes Material, das einen mindestens 10°C niedrigeren Schmelzpunkt aufweist als das Material des porösen/gebohrten/perforierten Formkörpers 4 als auch des Grundwerkstoffs.

Figur 5 zeigt einen Formkörper 4, der in diesem Beispiel eine, für einen Flächenschluss zwischen einzelnen Formkörpern 4 geeignete Geometrie eines Puzzleteils 25 aufweist.

Dabei verhaken sich die einzelnen Puzzleteile 25 in solcher Weise formschlüssig ineinander, dass vorzugsweise lediglich ein kapillarfähiger Spalt zwischen benachbarten Puzzleteilen 25 verbleibt. Die Gesamtzahl der in der Vertiefung 7 des Substrats 6, an denen betriebsbedingter Materialabtrag eingetreten ist, verlegten Puzzleteile 25 ergibt sich vorzugsweise aus der Bemessung des betreffenden, zu reparierenden Materialabtrags zuzüglich einer etwaigen Bearbeitungs- bzw. Rekonturierungszugabe.

Die Puzzleteile 25 lassen sich aufgrund besonderer geometrischer Gestalteigenschaften als konvex oder konkav begrenzter ebener Polygonkörper mit seinesgleichen zu einem lediglich Spalten zwischen einzelnen Polygonkörpern belassenden, beliebig ausgedehnten mosaikartigen, flächigen Belag ausbauen.
Jedes Puzzleteil 25 hat vorzugsweise zwei Vorsprünge 27, die zumindest konvex ausgebildet sind und vorzugsweise zwei Einbuchtungen 29, die zumindest konkav ausgebildet sind. Diese sind um einen Rumpfkörper 31 herum gebildet, der vorzugsweise quadratisch oder rechteckig ausgebildet ist.
Die Randstücke 35 (Fig. 7) oder Eckstücke 33 (Fig. 6), die an den Rand der Vertiefung 7 angrenzen, können auch ohne Einbuchtungen auskommen (wie bei einem Puzzlespiel).

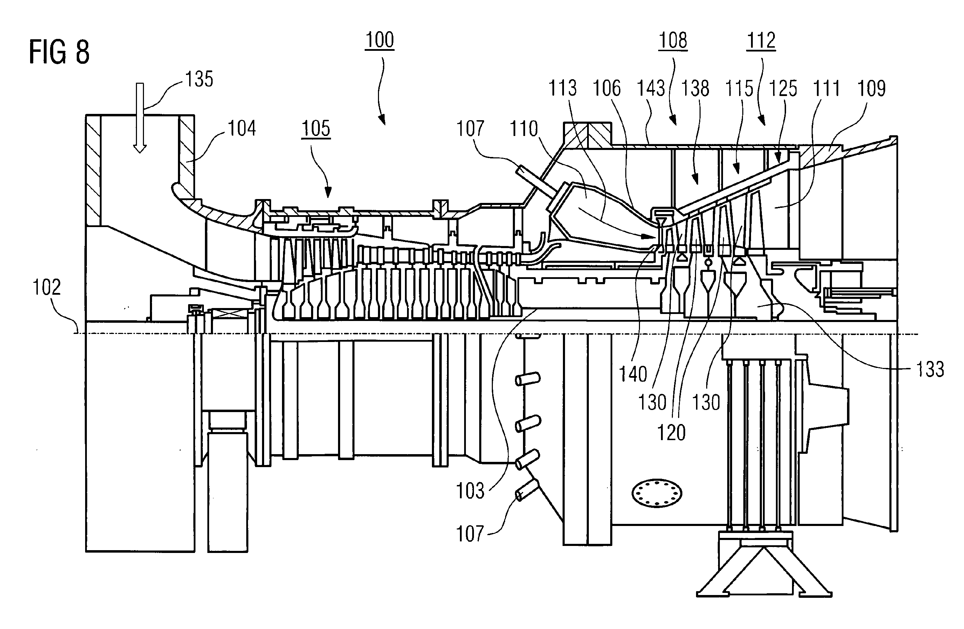

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrA1X kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

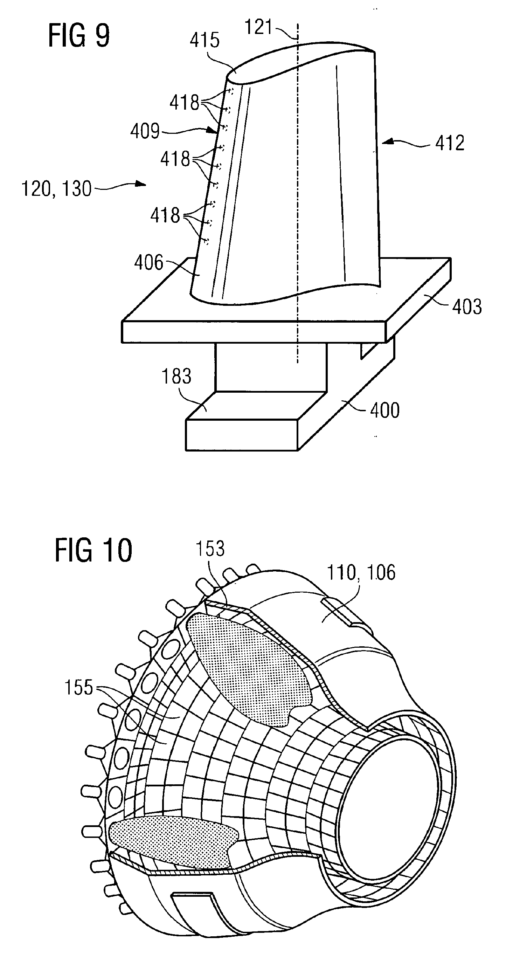

Die Figur 9 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12A1-0,6Y-3Re oder Ni-12Co-21Cr-11A1-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 10 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium. (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Formkörper (4) zur Verwendung beim Löten,
der flach ausgebildet ist und
der von einer Oberseite (19) des Formkörpers (4) zu einer Unterseite (22) des Formkörpers (4)
mindestens einen, insbesondere mehrere durchgehende Durchgänge (5) aufweist.

2. Formkörper nach Anspruch 1,
bei dem die Durchgänge (5) durch Perforationen oder Bohrungen von der Oberseite (19) bis zu der Unterseite (22) gebildet sind.

3. Formkörper nach Anspruch 1 oder 2,
bei dem die Durchgänge (5) durch eine offene Porosität ausgebildet sind,
insbesondere schwammartig ausgebildet sind.

4. Formkörper nach Anspruch 1, 2 oder 3,
bei dem der Formkörper (4) als Doppel-T-Stück (13) ausgebildet ist.

5. Formkörper nach Anspruch 4,
bei denen der T-Balken des Doppel-T-Stücks (13) eine zusätzliche Verhakung (16) aufweist.

6. Formkörper nach Anspruch 1, 2 oder 3,
bei dem der Formkörper (4) als Puzzleteil (25) ausgebildet ist,
das (25) als konvex und/oder konkav begrenzter, ebener Polygonkörper mit seinesgleichen zu einem lediglich Spalten zwischen einzelnen Polygonkörpern belassenden, zusammenhängenden flächigen Belag ausbaubar ist.

7. Formkörper nach Anspruch 6,
bei dem konvexe (27) wie auch konkave (29) Anteile der einzelnen Puzzleteile (25) eine formschlüssige Verhakung einzelner Puzzleteile (25) zu einem zusammenhängenden, flächigen Belag ermöglichen.

8. Formkörper nach Anspruch 1, 2, 3, 4, 5, 6 oder 7,
der ein Metall oder eine Metalllegierung aufweist, insbesondere nur aus Metall oder nur aus einer Metalllegierung besteht.

9. Formkörper nach Anspruch 8,
der eine Nickel- oder Kobaltlegierung,
insbesondere eine Nickellegierung aufweist.

10. Formkörper nach Anspruch 8 oder 9,
der neben Nickel, Chrom, Aluminium, Kobalt auch noch mindestens eines der Elemente Mo, W, Ti, Ta aufweist.

11. Formkörper nach einem oder mehreren der vorherigen Ansprüchen,
der als vorgesintertes Flachmaterial ausgebildet ist.

12. Anordnung von mehreren ineinandergelegten Formkörpern (4) nach einem oder mehreren der Ansprüche 1 bis 11.

13. Anordnung nach Anspruch 12,
bei der die Formkörper (4) miteinander verhakt sind.

14. Verfahren zum Löten eines Bauteils (13),
bei dem ein poröser Formkörper (4) nach einem der Ansprüche 1 bis 11 oder
eine Anordnung nach Anspruch 12 oder 13 verwendet wird, bei dem der poröse Formkörper (4) auf eine Oberfläche (16) des Bauteils (13) aufgelegt wird, und
in einem weiteren Schritt ein Lotmaterial aufgebracht wird, das durch eine Wärmebehandlung aufgeschmolzen wird
und durch den Formkörper (4) auf die Oberfläche (16) gelangt.

15. Bauteil,
das einen Formkörper (4) nach Anspruch 1, 2, 3, 4, 5, 6, 7, 8, 9, 10, 11 oder eine Anordnung nach Anspruch 12 oder 13 aufweist,
wobei um den Formkörper (4) ein Lotmaterial vorhanden ist, das einen niedrigeren Schmelzpunkt aufweist als das Material des Bauteils (13) und als das Material des Formkörpers (4).

16. Bauteil nach Anspruch 15,
bei dem der Formkörper (4) dasselbe Material wie das Bauteil (13) aufweist.

17. Bauteil nach Anspruch 15 oder 16,
das metallisch ist,
insbesondere eine nickel- oder kobaltbasierte Legierung aufweist.
